(19) Europäisches Patentamt
European Patent Office
Office européen des brevets

(11) **EP 2 802 750 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(21) Anmeldenummer: **13700155.8**

(22) Anmeldetag: **10.01.2013**

(51) Int Cl.:
*F01N 1/16* (2006.01)     *F01N 1/08* (2006.01)

(86) Internationale Anmeldenummer:
**PCT/EP2013/050339**

(87) Internationale Veröffentlichungsnummer:
**WO 2013/104689 (18.07.2013 Gazette 2013/29)**

(54) **SCHALLDÄMPFER-ANORDNUNG**

MUFFLER ARRANGEMENT

ENSEMBLE SILENCIEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2012 DE 102012200456**

(43) Veröffentlichungstag der Anmeldung:
**19.11.2014 Patentblatt 2014/47**

(73) Patentinhaber: **Kesstech GmbH**
**97531 Obertheres (DE)**

(72) Erfinder:
• **KESS, Roland**
**97531 Theres-Horhausen (DE)**
• **KESS, Pamela**
**97531 Theres-Horhausen (DE)**

(74) Vertreter: **Rätsch, Caroline**
**RÄTSCH:IP**
**Patentanwaltskanzlei**
**Kaiser-Wilhelm-Ring 35**
**40545 Düsseldorf (DE)**

(56) Entgegenhaltungen:
**EP-A2- 0 984 144         WO-A1-99/25962**
**WO-A1-2012/072789   DE-A1- 10 228 045**
**DE-A1-102005 029 279**

**Beschreibung**

Die Erfindung betrifft eine Schalldämpfer-Anordnung für Auspuffanlagen mit Verbrennungsmotor. Der Verbrennungsmotor ist vorzugsweise ein Diesel- oder Ottomotor.

Auspuffanlagen von Kraftfahrzeugen müssen gesetzlich vorgeschriebene Lärmemissions-Grenzwerte einhalten. Im Rahmen der gesetzlich vorgeschriebenen Lärmemissions-Grenzwerte wird beispielsweise von Motorradfahrern beim Fahren im Allgemeinen eine maximale Lautstärke der Auspuffanlage gewünscht. Die gesetzlich vorgeschriebenen Lärmemissions-Grenzwerte sind weltweit nicht einheitlich festgesetzt, sodass oftmals bei für den Export vorgesehenen Auspuffanlagen eine aufwendige Anpassung an die jeweils örtlich vorherrschenden Lärmemissions-Grenzwerte erforderlich ist.

Aus der DE 20 2005 011 448 U1 sind verschiedene Schalldämpfer für Auspuffanlagen bekannt. Diese Schalldämpfer haben sich in der Praxis bewährt. Ebenso sind aus den Dokumenten DE 10 2005 029 279 A1 oder DE 10 2006 044 381 A1, sowie aus der nachveröffentlichten WO 2012/072789 A1 gattungsgemäße Schalldämpfer bekannt.

Der Erfindung liegt die Aufgabe zugrunde, eine Schalldämpfer-Anordnung bereitzustellen, die ein äußerst genaues und einfaches Einstellen der Lautstärke des Schalldämpfers ermöglicht. Ferner soll die Schalldämpfer-Anordnung eine hohe Funktionssicherheit haben.

Diese Aufgabe wird erfindungsgemäß durch die in dem unabhängigen Anspruch 1 angegebenen Merkmale gelöst. Der Kern der Erfindung liegt darin, dass die Steuereinrichtung Fahrgeschwindigkeits-Signale und Motordrehzahl-Signale des Kraftfahrzeugs empfängt, wobei der mindestens eine Verstell-Antrieb in Abhängigkeit der Fahrgeschwindigkeits-Signale und der Motordrehzahl-Signale sowie von aus den Fahrgeschwindigkeit-Signalen und/oder den Motordrehzahl-Signalen berechneten Getriebegang-Signalen zur Verstellung des mindestens einen Verstell-Körpers betätigbar ist.

Unter Fahrgeschwindigkeits-Signalen werden hier Signale verstanden, die repräsentativ für die aktuelle Fahrgeschwindigkeit des Kraftfahrzeugs sind.

Unter Motordrehzahl-Signalen werden hier Signale verstanden, die repräsentativ für die aktuelle Motordrehzahl des Motors des Kraftfahrzeugs sind.

Die Signale sind vorzugsweise elektrisch bzw. elektronisch. Vorzugsweise ist die Steuer-Einrichtung eine elektronische Steuer-Einrichtung.

Beispielsweise sensiert ein Fahrgeschwindigkeits-Sensor die aktuelle Fahrgeschwindigkeit des Kraftfahrzeugs. Alternativ holt sich die Steuereinrichtung die Fahrgeschwindigkeits-Signale von einer Steuerelektronik des Kraftfahrzeugs.

Beispielsweise sensiert ein Motordrehzahl-Sensor die aktuelle Motordrehzahl des Kraftfahrzeugs. Alternativ holt sich die Steuereinrichtung die Motordrehzahl-Signale von der Steuerelektronik des Kraftfahrzeugs. Die Motordrehzahl-Signale können alternativ aber durch die Zündimpulse des Verbrennungsmotors bestimmbar sein.

Die Erfindung führt zu einer Schalldämpfer-Anordnung, deren Lautstärke äußerst exakt und einfach einstellbar ist.

Unter Getriebegang-Signalen werden hier Signale verstanden, die repräsentativ für den jeweils gewählten Getriebegang des Kraftfahrzeugs sind.

Die Schalldämpfer-Anordnung ist äußerst einfach ausgebildet. Die Getriebegang-Signale werden hier von der Steuereinrichtung berechnet. Eine Messung der Getriebegang-Signale erfolgt also nicht.

Durch den mindestens einen betätigbaren Verstell-Körper ist die Strömung des Abgases in dem Abgas-Strömungs-Rohr beeinflussbar. Beispielsweise kann der mindestens eine Verstell-Körper eine Strömung des Abgases in dem Abgas-Strömungs-Rohr erlauben oder vollständig unterbinden. Der mindestens eine Verstell-Körper kann aber auch Einfluss auf die Strömungsgeschwindigkeit des Abgases in dem Abgas-Strömungs-Rohr haben. Hierdurch ist die Lärmemission des Schalldämpfers veränderbar. Durch den mindestens einen Verstell-Körper sind beispielsweise der Abgas-Strom und der Abgasgegendruck veränderbar, was sich auch auf die Leistung und das Drehmoment des Verbrennungsmotors des Kraftfahrzeugs auswirkt.

Vorzugsweise ist der mindestens eine Verstell-Körper stufenlos verstellbar.

Vorzugsweise ist der mindestens eine Verstell-Körper in dem Abgas-Strömungs-Rohr angeordnet. Es kann sich eingangsseitig oder ausgangsseitig in dem Abgas-Strömungs-Rohr befinden. Er kann aber auch in einem Bereich angeordnet sein, der, vorzugsweise in etwa mittig, zwischen der Abgas-Einlass-Öffnung und der Abgas-Auslass-Öffnung liegt. Der mindestens eine Verstell-Körper kann aber auch an bzw. benachbart zu dem Abgas-Strömungs-Rohr angeordnet sein.

Vorteilhafterweise ist der mindestens eine Verstell-Körper als Verstell-Klappe ausgebildet, die zwischen einer Öffnungs-Stellung und einer Schließ-Stellung verschwenkbar ist. Die Schwenk-Bewegung der mindestens einen Verstell-Klappe ist vorzugsweise örtlich beschränkt. Hierfür können entsprechende EndAnschläge Anwendung finden, die eine weitere Verschwenkung des mindestens einen Verstell-Körpers unterbinden. Der mindestens eine Verstell-Körper ist entsprechend verschwenkbar gelagert.

Es ist von Vorteil, wenn der mindestens eine Verstell-Antrieb ein Elektro-Stell-Antrieb oder ein Servo-Antrieb oder ein anderer Gleichstrom-Antrieb ist.

Die Verbindung zwischen dem Verstell-Antrieb und dem Verstell-Körper erfolgt vorzugsweise über eine biegsame Welle, einen flexiblen bzw. starren Bowdenzug, ein Schnecken-Getriebe, Kegelräder, herkömmliche Zahnräder, Zahnverbindungen, einen Keilriemen, einen Kettenantrieb, eine Gelenk- bzw. Kardanwelle, Hebelübersetzungen, eine Hebel-Kugelhebelumlenkung, ein Gestänge, ein Gewinde oder eine Gewindestange.

Unter Kraftfahrzeugen werden hier motorisch angetriebene Fahrzeuge verstanden. Zu den Kraftfahrzeugen werden beispielsweise Motorräder, Personenkraftwagen, Lastkraftwagen, Kraftomnibusse, Zugmaschinen und Sonder-Kraftfahrzeuge gezählt. Der Schalldämpfer ist vorzugsweise ein End- oder Mittel-Schalldämpfer.

Das Abgas-Strömungs-Rohr ist im Querschnitt vorzugsweise kreisringförmig ausgebildet. Es kann aber auch beliebige andere Querschnitte, wie einen ovalen Querschnitt, haben. Es ist vorzugsweise mindestens bereichsweise umfangsseitig perforiert und an einen Verbrennungsmotor anschließbar. Dem Verbrennungsmotor kann ein Katalysator zur Abgas-Nachbehandlung zugeordnet sein. Dem Verbrennungsmotor kann aber auch kein Katalysator zugeordnet sein.

Es ist von Vorteil, wenn das Abgas-Strömungs-Rohr mindestens bereichsweise von einem Absorptions-Material umgegeben ist. Als Absorptions-Material können beispielsweise Stahl- oder Edelstahlwolle, Basaltfasern, Fiberglasmatten oder - fäden oder dergleichen Anwendung finden. Alternativ kann aber auch ein blankes Abgas-Strömungs-Rohr ohne Absorptions-Material Anwendung finden.

Vorteilhafterweise ist das Absorptions-Material mindestens bereichsweise von einem Schalldämpfer-Gehäuse umgeben. Das Schalldämpfer-Gehäuse kann im Querschnitt kreisringförmig oder oval ausgebildet sein. Es kann aber auch andere Querschnittformen aufweisen.

Die Schalldämpfer-Anordnung kann auch mehr als einen Schalldämpfer umfassen. Die Schalldämpfer sind dann in Reihe oder parallel geschaltet.

Weitere vorteilhafte Ausgestaltungen der Erfindung sind in den Unteransprüchen angegeben.

Auch die Ausgestaltung nach Anspruch 2 führt zu einer Schalldämpfer-Anordnung, deren Lautstärke äußerst exakt und einfach steuerbar ist.

Die Steuereinrichtung nach Anspruch 4 bzw. 5 ist äußerst vielseitig. Unter Kraftfahrzeug-unabhängigen Signalen werden hier beispielsweise Radarwarnsignale oder Fahrzyklensignale verstanden.

Über den Eingabe-Eingang sind vorzugsweise der Steuereinrichtung Schwellenwerte und/oder andere Werte, wie Kraftfahrzeug-Werte, wie das Gewicht, die Länge, die Leistung des Kraftfahrzeugs, zuführbar.

Vorzugsweise betätigt die Steuereinrichtung den Verstell-Antrieb zur Verstellung des mindestens einen Verstell-Körpers, wenn der mindestens eine Geschwindigkeits-Schwellenwert nach Anspruch 6 überschritten bzw. unterschritten ist. Vorzugsweise ist in der Steuereinrichtung mindestens ein Fahrgeschwindigkeits-Intervall hinterlegt, das durch mindestens einen Fahrgeschwindigkeits-Schwellenwert begrenzt ist.

Analoges gilt zu dem mindestens einen Motordrehzahl-Schwellenwert gemäß Anspruch 7 und zu dem mindestens einen Getriebegang-Schwellenwert nach Anspruch 8.

Vorzugsweise betätigt die Steuereinrichtung den Verstell-Antrieb zur Verstellung des mindestens einen Verstell-Körpers, wenn der mindestens eine Motordrehzahl-Schwellenwert überschritten bzw. unterschritten ist. Vorzugsweise ist in der Steuereinrichtung mindestens ein Motordrehzahl-Intervall hinterlegt, das durch mindestens einen Motordrehzahl-Schwellenwert begrenzt ist.

Vorzugsweise betätigt die Steuereinrichtung den Verstell-Antrieb zur Verstellung des mindestens einen Verstell-Körpers, wenn der mindestens eine Getriebegang-Schwellenwert überschritten bzw. unterschritten ist. Vorzugsweise ist in der Steuereinrichtung mindestens ein Getriebegang-Intervall hinterlegt, das durch mindestens einen Getriebegang-Schwellenwert begrenzt ist.

Gemäß Anspruch 9 ist die Steuereinrichtung fernbedienbar. Beispielsweise ist diese so ein- bzw. ausschaltbar. Es ist zweckmäßig, wenn auch Schwellenwerte durch die Fernbedienung veränderlich sind.

Die Ausgestaltung nach Anspruch 10 ergibt eine Schalldämpfer-Anordnung, die äußerst komfortabel ist.

Nachfolgend wird unter Bezugnahme auf die beigefügte Zeichnung eine bevorzugte Ausführungsform der Erfindung beispielhaft beschrieben. Dabei zeigen:

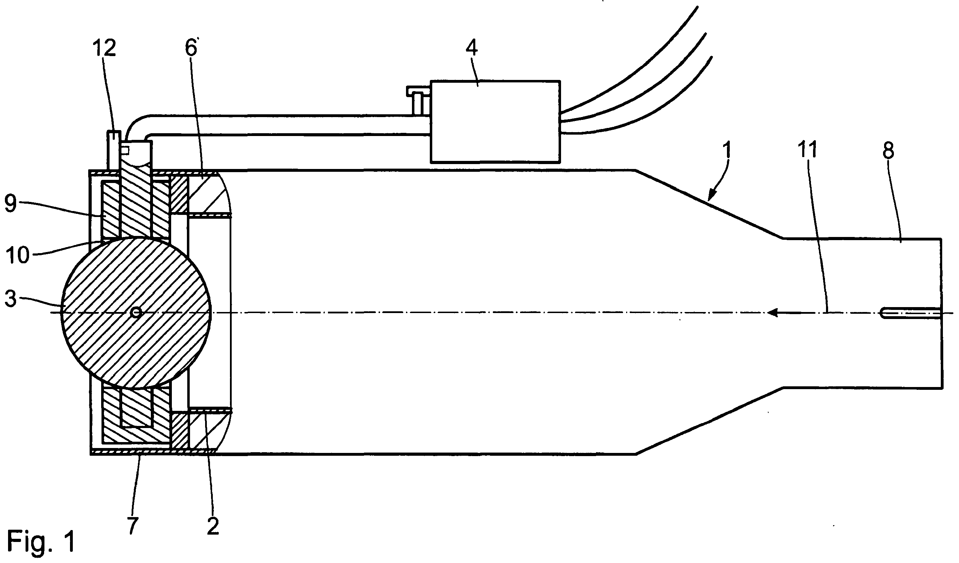

Figur 1     eine vereinfachte schematische Ansicht einer erfindungsgemäßen Schalldämpfer-Anordnung,

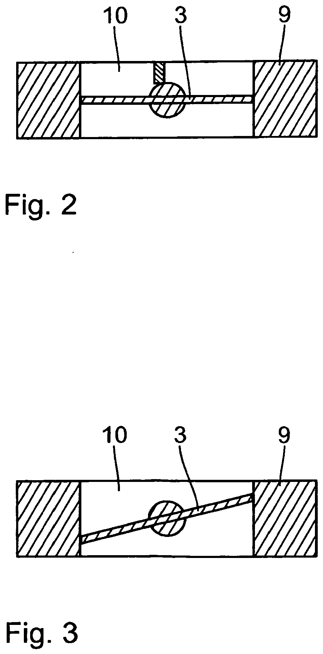

Figur 2     eine vereinfachte Ansicht eines Verstell-Körpers der in Fig. 1 gezeigten Schalldämpfer-Anordnung, wobei sich der Verstell-Körper in seiner Schließ-Stellung befindet,

Figur 3     den in Fig. 2 dargestellten Verstell-Körper in dessen Offen-Stellung, und

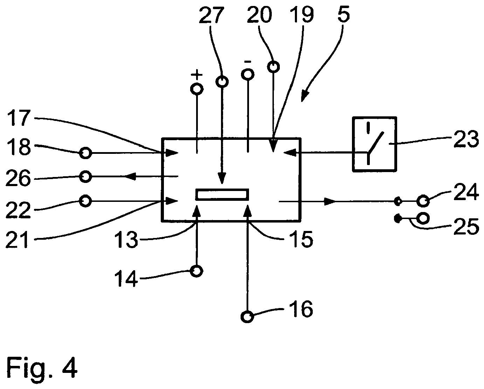

Figur 4     eine vereinfachte Darstellung der Steuereinrichtung der Schalldämpfer-Anordnung gemäß Fig. 1.

Eine Schalldämpfer-Anordnung umfasst einen Schalldämpfer 1, der ein Abgas-Strömungs-Rohr 2 und einen stromabwärts zu dem Abgas-Strömungs-Rohr 2 angeordneten Verstell-Körper 3 zum Beeinflussen der Strömung des Abgases in dem Abgas-Strömungs-Rohr 2 aufweist. Der Schalldämpfer 1 hat ferner einen Verstell-Antrieb 4, der mit dem Verstell-Körper 3 zum Verstellen desselben in Antriebs-Verbindung steht.

Die Schalldämpfer-Anordnung weist ferner eine Steuereinrichtung 5 auf, die mit dem Verstell-Antrieb 4 zum Betätigen desselben in datenübertragender Weise in Verbindung steht.

Das Abgas-Strömungs-Rohr 2 begrenzt einen Abgas-Strömungs-Kanal. Es ist vorzugsweise seitlich von Absorptions-Material 6 umgeben. Ferner weist der Schalldämpfer 1 ein Schalldämpfer-Gehäuse 7 auf, das das Absorptions-Material 6 außen umgibt und im Querschnitt vorzugsweise kreisringförmig ist.

Der Schalldämpfer 1 weist eingangsseitig ein Anschluss-Stück 8 auf, das an einen Verbrennungsmotor eines Kraftfahrzeugs oder an einen anderen Schalldämpfer anschließbar ist.

Stromabwärts zu dem Absorptions-Material 6 und dem Abgas-Strömungs-Rohr 2 ist in dem Schalldämpfer-Gehäuse 7 eine Verstell-Körper-Aufnahme 9 angeordnet, die im Querschnitt kreisringförmig ist. Die Verstell-Körper-Aufnahme 9 begrenzt einen Abgas-Durchtritts-Kanal 10, in dem der Verstell-Körper 3 betätigbar untergebracht ist.

Der Verstell-Körper 3 ist durch eine kreisförmige Klappe gebildet, deren Durchmesser in etwa dem Innen-Durchmesser der Verstell-Körper-Aufnahme 9 entspricht. Er steht mit einem Lagerkörper in drehfester Verbindung, der in der Verstell-Körper-Aufnahme 9 schwenkbar gelagert ist und durch Aufbringen einer externen Verschwenk-Kraft verschwenkbar ist. Der Lagerkörper ist vorzugsweise stiftartig ausgebildet und erstreckt sich senkrecht zu einer Längs-Mittel-Achse 11 des Schalldämpfers 1.

Der Verstell-Antrieb 4 ist vorzugsweise ein Elektro-Stell-Antrieb oder ein Servo-Antrieb oder ein anderer Gleichstrom-Antrieb. Er hat vorzugsweise eine Antriebs-Welle (nicht dargestellt), die mit dem Verstell-Körper 3 zur Betätigung desselben in Wirk-Verbindung steht. Ferner umfasst der Verstell-Antrieb 4 einen EndAnschlag 12, der vorzugsweise ortsfest an dem Gehäuse des Verstell-Antriebs 4 angebracht ist. Er kann mit einem Mitnehmer (nicht dargestellt) wechselwirken, der an der Antriebs-Welle befestigt ist. Wenn der Mitnehmer an dem EndAnschlag 12 in Anlage kommt, steigt der Strom des Verstell-Antriebs 4. Dies wird dann von der Steuereinrichtung 5 erkannt. Für den Verstell-Antrieb 4 kann alternativ aber auch eine Betätigungszeit einprogrammiert sein, in der er dann in eine Richtung läuft. Eine derartige Ausgestaltung ist technisch äußerst einfach und kostengünstig realisierbar. Der mechanische Anschlag ist aus mechanischen Gründen trotzdem vorteilhaft.

Nachfolgend wird die Funktion des Schalldämpfers 1 im Betrieb detailliert beschrieben. Dabei wird zunächst auf den Betrieb des Schalldämpfers 1 bei geschlossenem Verstell-Körper 3 eingegangen. Das aus dem Verbrennungsmotor des Kraftfahrzeugs austretende Abgas gelangt über das Anschluss-Stück 8 in das Abgas-Strömungs-Rohr 2. Nachdem sich der Verstell-Körper 3 in seiner Schließ-Stellung befindet und so den Abgas-Durchtritts-Kanal 10 in der Verstell-Körper-Aufnahme 9 vollständig verschließt, strömt das Abgas in einen Bypass-Körper, wo der Schall gedämpft wird. Das Abgas passiert so den Verstell-Körper 3 und verlässt dann den Schalldämpfer 1. Der Bypass-Körper kann ein interner oder externer Bypass-Körper sein. Wenn der Bypass-Körper als interner Bypass-Körper ausgebildet ist, erstreckt er sich innerhalb des Schalldämpfer-Gehäuses 7 und vorzugsweise entlang des Abgas-Strömungs-Rohrs 2. Wenn der Bypass-Körper als externer Bypass-Körper ausgeführt ist, steht dieser mit dem Abgas-Strömungs-Rohr 2 in Strömungsverbindung und erstreckt sich im Wesentlichen außerhalb des Schalldämpfer-Gehäuses 7. Andere Ausgestaltungen sind alternativ möglich.

Wenn sich der Verstell-Körper 3 dagegen in seiner Öffnungs-Stellung befindet, ist der Abgas-Durchtritts-Kanal 10 freigegeben. Der Verstell-Körper 3 ist hier gegenüber seiner Schließ-Stellung um etwa 90° geschwenkt. Die Schwenk-Bewegung erfolgt durch den Verstell-Antrieb 4. Das Abgas kann so das Abgas-Strömungs-Rohr 2 vollständig axial durchströmen und dabei auch den Abgas-Durchtritts-Kanal 11 durchsetzen. Der Schall wird bei geschlossenem Verstell-Körper 3 stärker gedämpft als bei offenem Verstell-Körper 3. Der Schalldämpfer 1 ist also bei geschlossenem Verstell-Körper 3 leiser als bei offenem Verstell-Körper 3.

Die Betätigung bzw. Ansteuerung des Verstell-Antriebs 4 erfolgt durch die Steuereinrichtung 5, auf die nun nachfolgend näher eingegangen wird.

Die Steuereinrichtung 5 hat einen Fahrgeschwindigkeits-Signal-Eingang 13, der mit einem Fahrgeschwindigkeits-Sensor 14 in datenübertragender Weise in Verbindung steht. Der Fahrgeschwindigkeits-Sensor 14 sensiert die aktuelle Fahrgeschwindigkeit des Kraftfahrzeugs. Für die Fahrgeschwindigkeit des Kraftfahrzeugs repräsentative Fahrgeschwindigkeits-Signale werden dann im Betrieb des Kraftfahrzeugs über den Fahrgeschwindigkeits-Signal-Eingang 13 der Steuereinrichtung 5 zugeführt.

Die Steuereinrichtung 5 hat ferner einen Motordrehzahl-Signal-Eingang 15, der mit einem Motordrehzahl-Sensor 16 in datenübertragender Weise in Verbindung steht. Der Motordrehzahl-Sensor 16 sensiert die aktuelle Motordrehzahl des Verbrennungsmotors des Kraftfahrzeugs. Für die Motordrehzahl repräsentative Motordrehzahl-Signale 15 werden dann bei Betrieb des Kraftfahrzeugs über den Motordrehzahl-Signal-Eingang 15 der Steuereinrichtung 5 zugeführt.

Die Steuereinrichtung 5 hat außerdem einen Abgasgegendruck-Signal-Eingang 17, der mit einem Abgasgegendruck-Sensor 18 in datenübertragender Weise in Verbindung steht. Der Abgasgegendruck-Sensor 18 sensiert im Betrieb des Kraftfahrzeugs den im Abgas-Strömungs-Rohr 2 aktuell herrschenden Abgasgegendruck. Für den Abgasgegendruck repräsentative Abgasgegendruck-Signale werden dann über den Abgasgegendruck-Signal-Eingang 17 der Steuereinrichtung 5 zugeführt.

Die Steuereinrichtung 5 hat außerdem einen Eingang 19 für Kraftfahrzeug-unabhängige Signale. Der Eingang 19 steht mit einer Ermittlungs- bzw. Erfassungseinheit 20 in datenübertragender Weise in Verbindung. Die Ermittlungs- bzw. Erfassungseinheit 20 ermittelt bzw. erfasst Kraftfahrzeug-unabhängige Signale, wie Radarwarnsignale, Fahrzyklen oder dergleichen. Diese Signale werden über den Eingang 19 der Steuereinrichtung 5 zugeführt.

Die Steuereinrichtung 5 hat außerdem einen Eingabe-Eingang 21. Über den Eingabe-Eingang 21 können der Steuereinrichtung 5 verschiedene Werte, wie Schwellenwerte und/oder Kraftfahrzeug-Werte, wie Gewicht, Länge oder dergleichen, zugeführt werden. Mit dem Eingabe-Eingang 21 ist eine entsprechende Eingabe-Einheit 22 verbindbar, die vorzugsweise ein Computer, eine Tastatur oder dergleichen ist.

Ferner steht ein Tast-Schalter 23 mit der Steuereinrichtung 5 in Verbindung, der zum manuellen Ein- bzw. Ausschalten der geschwindigkeitsabhängigen und/oder drehzahlabhängigen und/oder getriebegangabhängigen Automatik der Steuereinrichtung 5 dient. Insbesondere dient der Tast-Schalter 23 nur zum Aktivieren/Einschalten oder Deaktivieren/ Ausschalten der geschwindigkeits-, drehzahl- und/oder getriebegangabhängigen Automatik der Steuereinrichtung 5. Beim "Deaktivieren" bleibt der Verstell-Körper 3 in seiner Schließ-Stellung.

Ferner steht ein Auspuffprüf-Taster 24 mit der Steuereinrichtung 5 in Verbindung. Dieser dient zum vollständigen Abschalten der Steuereinrichtung 5. Mit dem Auspuffprüf-Taster 24 ist ein Prüf-Modus in der Steuereinrichtung 5 aktivierbar, welcher die Kontrolle des Verstell-Körpers 3 ohne fahren zu müssen möglich macht. Durch Betätigung des Auspuffprüf-Tasters 24 kann die Funktionsfähigkeit des Schalldämpfers 1 nach Anbau an dem Kraftfahrzeug bzw. zu Wartungsarbeiten geprüft werden.

Ferner hat die Steuereinrichtung 5 eine Fernbedienung 25, über die sie fernbedienbar ist.

Über eine Verbindung 26 ist die Steuereinrichtung 5 mit dem Verstell-Antrieb 4 in datenübertragenderweise zum Betätigen desselben verbunden.

Die Steuereinrichtung 5 umfasst außerdem eine Zentraleinheit 27, die erfindungsgemäß im Betrieb der Steuereinrichtung 5 aus den empfangenen Fahrgeschwindigkeits-Signalen und Motordrehzahl-Signalen die entsprechenden, jeweils vorliegenden Getriebegänge berechnet.

Nachfolgend wird die Funktion der Steuereinrichtung 5 näher beschrieben. Wie bereits erwähnt, empfängt die Steuereinrichtung 5 Fahrgeschwindigkeits-Signale und Motordrehzahl-Signale. Die Zentraleinheit 27 berechnet durch die empfangenen Fahrgeschwindigkeits-Signale und/oder Motordrehzahl-Signale die Getriebegänge des Kraftfahrzeugs. Es ist bevorzugt, dass die Zentraleinheit 27 die Getriebegänge durch die Fahrgeschwindigkeits-Signale und die Motordrehzahl-Signale berechnet.

In der Steuereinrichtung 5 sind Fahrgeschwindigkeits-Schwellenwerte, Motordrehzahl-Schwellenwerte und Getriebegang-Schwellenwerte hinterlegt. Anhand dieser Schwellenwerte erfolgt eine Betätigung des Verstell-Körpers 3 über den Verstell-Antrieb 4. Sobald also diese Schwellenwerte überschritten bzw. unterschritten werden, wird der Verstell-Körper 3 durch den Verstell-Antrieb 4 betätigt.

Die Steuereinrichtung 5 ist erfindungsgemäß derart ausgebildet, dass sie in der Lage ist, den Verstell-Antrieb 4 in Abhängigkeit der Motordrehzahl-Signale, Fahrgeschwindigkeits-Signale und der Getriebegang-Signale zu betätigen. Es sind dann also drei Bedingungen erforderlich, damit die Steuereinrichtung 5 den Verstell-Antrieb 4 betätigt.

Zusätzlich ist die Steuereinrichtung 5 vorzugsweise derart ausgebildet, dass sie in der Lage ist, den Verstell-Antrieb 4 zusätzlich oder alternativ in Abhängigkeit der Abgasgegendruck-Signale zu betätigen.

Die Steuereinrichtung 5 berechnet vorzugsweise auch Beschleunigungswerte des Kraftfahrzeugs. Die Beschleunigungswerte können auch entsprechend über mindestens einen Beschleunigungssensor gemessen werden. Vorzugsweise werden die gemessenen Beschleunigungswerte gemittelt.

In Abhängigkeit der gemessenen Werte werden Geräuschwerte des Schalldämpfers 1 berechnet.

Der Abgasgegendruck-Signal-Eingang 17 an der Steuereinrichtung 5 in Verbindung mit dem Abgasgegendruck-Sensor 18 ist optional. Der Eingang 19 für die Kraftfahrzeug-unabhängigen Signale an der Steuereinrichtung 5 in Verbindung mit der Ermittlungs- bzw. Erfassungseinheit 20 ist optional. Der Eingabe-Eingang 21 an der Steuereinrichtung 5 ist optional. Die Fernbedienung 25 ist optional. Unter "optional" wird hier verstanden, dass diese Mittel auch weggelassen werden können. Die angegebenen optionalen Mittel könnten aber einzeln oder allesamt bei verschiedenen Ausführungsformen vorhanden sein.

Nachfolgend sind die Formeln bzw. Bedingungen angegeben, anhand welcher die Steuereinrichtung 5 voneinander unabhängige oder miteinander in Verbindung stehende Befehle zur Betätigung des Verstell-Antriebs 4 abgibt.

$$\text{awot ref} = 2.47 * \log(PMR) - 2.52 \text{ für Kraftfahrzeuge mit } PMR \leq 50$$

und

$$awot\ ref = 3.33 * \log(PMR) - 4.16 \text{ für Kraftfahrzeuge mit PMR} > 50$$

$$aurban = 1.37 * \log(PMR) - 1.08 \text{ für Kraftfahrzeuge mit PMR} \leq 50$$

$$aurban = 1.28 * \log(PMR) - 1.19 \text{ für Kraftfahrzeuge mit PMR} > 50$$

1. Berechnung der Beschleunigung zwischen Linien AA' und BB'

Die Beschleunigung des Kraftfahrzeugs wird anhand von Messungen der Kraftfahrzeuggeschwindigkeit bei den Linien AA' und BB' berechnet:

$$awot,(i),j = ((vBB',j / 3.6)^2 - (vAA',j / 3.6)^2) / (2 * (20 + Iref))$$

Der Index "(i)" bezieht sich auf den verwendeten Getriebegang und der Index "j" auf die Anzahl der Messungen. Die Fahrgeschwindigkeiten werden in der Einheit km/h angegeben und die sich ergebenden Beschleunigungen des Kraftfahrzeugs haben die Einheit $m/s^2$.
Iref ist entweder die Länge des Kraftfahrzeugs oder 2 m, was von dem Hersteller des Kraftfahrzeugs, die Typzulassungsbehörde bzw. dem technischen Service frei wählbar ist.

2. Berechnung der Beschleunigung zwischen den Linien PP' and BB'

Die Beschleunigung des Kraftfahrzeugs wird anhand der Messungen der Fahrgeschwindigkeit des Kraftfahrzeugs bei den Linien PP' und BB' berechnet:

$$awot,(i),j = ((vBB',j / 3.6)^2 - (vPP',j / 3.6)^2) / (2 * (10 + Iref))$$

Der Index "(i)" bezieht sich auf den verwendeten Getriebegang und der Index "j" auf die Anzahl der Messungen. Die Fahrgeschwindigkeiten werden in der Einheit km/h angegeben und die sich ergebenden Beschleunigungen des Kraftfahrzeugs haben die Einheit $m/s^2$.
Iref ist entweder die Länge des Kraftfahrzeugs oder 2 m, was von dem Hersteller des Kraftfahrzeugs, die Typzulassungsbehörde bzw. dem technischen Service frei wählbar ist.
Eine Vor-Beschleunigung des Kraftfahrzeugs soll nicht verwendet werden.

3. Mitteln der einzelnen Messungen

Die berechneten Beschleunigungen des Kraftfahrzeugs von drei gültigen Läufen werden arithmetisch gemittelt, um die mittlere Beschleunigung des Kraftfahrzeugs für den Testzustand zu liefern:

$$awot,(i) = (1 / 3) * (awot,(i),1 + awot,(i),2 + awot,(i),3)$$

4. Berechnung des Getriebegang-Wichtungsfaktors

Der Getriebegang-Wichtungsfaktor k wird nur im Falle eines Zweigangtests verwendet, um die Ergebnisse von beiden Getriebegängen zu einem einzigen Ergebnis zusammenzufassen.
Der Getriebegang-Wichtungsfaktor k ist eine dimensionslose Zahl, die wie folgt definiert ist:

$$k = (awot,ref - awot,(i+1)) / (awot(i) - awot,(i+1))$$

5. Berechnung des Teilleistungsfaktors

Der Teilleistungsfaktor kp ist eine dimensionslose Zahl, die verwendet wird, um die Ergebnisse eines Volllast-Beschleunigungstests mit den Ergebnissen eines Konstant-Geschwindigkeitstests zu vereinen. Für Kraftfahrzeuge, die in zwei Getriebegängen getestet worden sind, ist der Teilleistungsfaktor wie folgt definiert:

$$kp = 1 - (aurban / awot,ref)$$

Für Kraftfahrzeuge, die in einem einzigen Getriebegang oder mit einem Gangwahlmittel in einer Position getestet worden sind, ist der Teilleistungsfaktor wie folgt definiert:

$$kp = 1 - (aurban / awot,(i))$$

Falls awot,(i) gleich oder kleiner als aurban ist, wird kp auf Null gesetzt.

6. Verarbeitung der Schalldruckmessungen

Für einen gegebenen Testzustand sollen die drei einzelnen Ergebnisse von jeder Seite des Kraftfahrzeugs separat gemittelt werden:

$$Lmode,(i),side = (1 / 3) * (Lmode,(i),side,1 + Lmode,(i),side,2 + Lmode,(i),side,3)$$

Der Index "Mode" bezieht sich auf den Testmodus (Volllast-Beschleunigung oder konstante Geschwindigkeit).
Der Index "(i)" bezieht sich auf den Getriebegang und "side" auf die Position des Mikrophons (links oder rechts).
Der höhere Wert der zwei Mittelungen soll mathematisch auf die nächste, erste Dezimalstelle (beispielsweise XX.X) gerundet werden und für weitere Berechnungen vermerkt werden:

$$Lmode,(i) = MAX (Lmode,(i),left ; Lmode,(i),right)$$

Falls das Kraftfahrzeug in zwei Getriebegängen getestet worden ist, wird der Getriebegang-Wichtungsfaktor verwendet, um die Testergebnisse der Volllast-Beschleunigungstests und der Tests mit konstanter Geschwindigkeit zu berechnen:

$$Lwot = Lwot (i+1) + k * (Lwot,(i) - Lwot,(i+1))$$

$$Lcrs = Lcrs (i+1) + k * (Lcrs,(i) - Lcrs,(i+1))$$

Falls das Kraftfahrzeug in einem einzelnen Getriebegang oder einer einzelnen Getriebegang-Wahlposition getestet worden ist, ist kein Wichtungsfaktor erforderlich:

$$Lwot = Lwot,(i)$$

$$Lcrs = Lcrs,(i)$$

$$Lurban = Lwot - kp * (Lwot - Lcrs)$$

Nachfolgend sind weitere Erklärungen zu den obigen Abkürzungen angegeben:

| | |
|---|---|
| AA | virtuelle Linie auf der Testbahn |
| awot m/s2 | berechnete Beschleunigung |
| awot,ref m/s2 | vorgegebene Referenzbeschleunigung |
| aurban m/s2 v | vorgegebene Zielbeschleunigung |
| BB' | virtuelle Linie auf der Testbahn |
| CC | virtuelle Linie auf der Testbahn |
| k | Getriebegang-Wichtungsfaktor |
| kp | Teillastfakor |
| L dB(A) | Schalldruckwert |
| IPA m | Vor-Beschleunigungslänge |
| mkerb kg | fahrfertiges Gewicht des Kraftfahrzeugs mit vollem Tank ohne Insassen |
| mt kg | Testgewicht des Kraftfahrzeugs |
| n min-1 | gemessene Motordrehzahl |
| nidle min-1 | Motordrehzahl bei Leerlauf |
| nwot(i) min-1 nPP' | entspricht Lwot(i) Annex |
| PP' | virtuelle Linie auf der Testbahn Annex 4 |
| PMR | Leistung zu Masse - Verhältnisindex |
| Pn kW | bewertete maximale Leistung |
| S min-1 | bewertete Motordrehzahl |
| v km/h | gemessene Geschwindigkeit des Kraftfahrzeugs |
| vmax km/h | maximale Geschwindigkeit |
| vtest km/h | vorgegebene Testgeschwindigkeit |

**Patentansprüche**

1. Schalldämpfer-Anordnung für Auspuffanlagen von Kraftfahrzeugen mit Verbrennungsmotor, umfassend

   a. einen Schalldämpfer (1) mit

      i. einem Abgas-Strömungs-Rohr (2) zur Führung von Abgas, das aufweist

         - mindestens eine Abgas-Einlass-Öffnung und
         - mindestens eine Abgas-Auslass-Öffnung, die mit der mindestens einen Abgas-Einlass-Öffnung in Strömungsverbindung steht,

      ii. mindestens einem zwischen einer Öffnungs-Stellung und einer Schließ-Stellung verstellbaren Verstell-Körper (3) zum Beeinflussen der Abgas-Strömung in dem Abgas-Strömungs-Rohr (2), und
      iii. mindestens einem Verstell-Antrieb (4), der mit dem mindestens einen Verstell-Körper (3) zur Verstellung desselben in Verbindung steht, und

   b. eine Steuereinrichtung (5), die

      i. einen Fahrgeschwindigkeits-Signal-Eingang (13) zum Empfangen von Fahrgeschwindigkeits-Signalen des Kraftfahrzeugs aufweist,
      ii. einen Motordrehzahl-Signal-Eingang (15) zum Empfangen von Motordrehzahl-Signalen des Kraftfahrzeugs aufweist, und
      iii. mit dem mindestens einen Verstell-Antrieb (4) zur Verstellung des mindestens einen Verstell-Körpers (3) in datenübertragender Weise in Verbindung steht, wobei die Steuereinrichtung (5) in Abhängigkeit der Fahrgeschwindigkeits-Signale und/oder der Motordrehzahl-Signale die Getriebegang-Signale berechnet, und

   die Steuereinrichtung (5) den mindestens einen Verstell-Antrieb (4) in Abhängigkeit der Fahrgeschwindigkeits-Signale und der Motordrehzahl-Signale sowie von Getriebegang-Signalen des Kraftfahrzeugs zur Verstellung des mindestens einen Verstell-Körpers (3) betätigt.

**2.** Schalldämpfer-Anordnung nach Anspruch 1, **dadurch gekennzeichnet, dass** die Steuereinrichtung (5) einen Abgasgegendruck-Signal-Eingang (17) zum Empfangen von Signalen aufweist, die repräsentativ für den Abgasgegendruck in dem Abgas-Strömungs-Rohr (2) sind.

**3.** Schalldämpfer-Anordnung nach Anspruch 2, **dadurch gekennzeichnet, dass** die Steuereinrichtung (5) den mindestens einen Verstell-Antrieb (4) in Abhängigkeit der Abgasgegendruck-Signale zur Verstellung des mindestens einen Verstell-Körpers (3) betätigt.

**4.** Schalldämpfer-Anordnung nach einem der vorherigen Ansprüche, **dadurch gekennzeichnet, dass** die Steuereinrichtung (5) einen Eingang (19) für Kraftfahrzeug-unabhängige Signale aufweist.

**5.** Schalldämpfer-Anordnung nach einem der vorherigen Ansprüche, **dadurch gekennzeichnet, dass** die Steuereinrichtung (5) einen Eingabe-Eingang (21) zur Eingabe von Werten aufweist.

**6.** Schalldämpfer-Anordnung nach einem der vorherigen Ansprüche, **dadurch gekennzeichnet, dass** in der Steuereinrichtung (5) mindestens ein Fahrgeschwindigkeits-Schwellenwert zur Betätigung des mindestens einen Verstell-Antriebs (4) enthalten ist, wobei vorzugsweise der mindestens eine Fahrgeschwindigkeits-Schwellenwert vorbestimmt oder veränderlich ist.

**7.** Schalldämpfer-Anordnung nach einem der vorherigen Ansprüche, **dadurch gekennzeichnet, dass** in der Steuereinrichtung (5) mindestens ein Motordrehzahl-Schwellenwert zur Betätigung des mindestens einen Verstell-Antriebs (4) enthalten ist, wobei vorzugsweise der mindestens eine Motordrehzahl-Schwellenwert vorbestimmt oder veränderlich ist.

**8.** Schalldämpfer-Anordnung nach einem der vorherigen Ansprüche, **dadurch gekennzeichnet, dass** in der Steuereinrichtung (5) mindestens ein Getriebegang-Schwellenwert zur Betätigung des mindestens einen Verstell-Antriebs (4) enthalten ist.

**9.** Schalldämpfer-Anordnung nach einem der vorherigen Ansprüche, **dadurch gekennzeichnet, dass** die Steuereinrichtung (5) fernbedienbar ist.

**10.** Schalldämpfer-Anordnung nach einem der vorherigen Ansprüche, **dadurch gekennzeichnet, dass** die Verstellung des mindestens einen Verstell-Körpers (3) zeitlich verzögert erfolgt, wobei die Verzögerungszeit vorzugsweise einstellbar ist.

**Claims**

**1.** Silencer arrangement for exhaust systems of motor vehicles with an internal combustion engine, comprising

    a. a silencer (1) with

        i. an exhaust gas flow pipe (2) for feeding exhaust gas, which exhaust gas flow pipe (2) has

            - at least one exhaust gas inlet opening and
            - at least one exhaust gas outlet opening which has a flow connection to the at least one exhaust gas inlet opening,

        ii. at least one adjustment body (3), which can be adjusted between an opening position and a closed position, for influencing the exhaust gas flow in the exhaust gas flow pipe (2), and
        iii. at least one adjustment drive (4) which is connected to the at least one adjustment body (3) in order to adjust the latter, and

    b. a control device (5) which has

        i. a velocity signal input (13) for receiving velocity signals of the motor vehicle,
        ii. an engine speed signal input (15) for receiving engine speed signals of the motor vehicle, and
        iii. a data-transmitting connection to the at least one adjustment drive (4) for adjusting the at least one adjustment body (3),

wherein the control device (5) calculates the gear speed signals as a function of the velocity signals and/or the engine speed signals, and the control device (5) activates the at least one adjustment drive (4) as a function of the velocity signals and the engine speed signals and gear speed signals of the motor vehicle in order to adjust the at least one adjustment body (3).

2. Silencer arrangement according to Claim 1, **characterized in that** the control device (5) has an exhaust gas counter-pressure signal input (17) for receiving signals which are representative of the exhaust gas counter-pressure in the exhaust gas flow pipe (2).

3. Silencer arrangement according to Claim 2, **characterized in that** the control device (5) activates the at least one adjustment drive (4) as a function of the exhaust gas counter-pressure signals for adjusting the at least one adjustment body (3).

4. Silencer arrangement according to one of the preceding claims, **characterized in that** the control device (5) has an input (19) for motor-vehicle-independent signals.

5. Silencer arrangement according to one of the preceding claims, **characterized in that** the control device (5) has an input entry (21) for inputting values.

6. Silencer arrangement according to one of the preceding claims, **characterized in that** at least one velocity threshold value for activating the at least one adjustment drive (4) is included in the control device (5), wherein the at least one velocity threshold value is preferably predetermined or variable.

7. Silencer arrangement according to one of the preceding claims, **characterized in that** at least one engine speed threshold value for activating the at least one adjustment drive (4) is included in the control device (5), wherein the at least one engine speed threshold value is preferably predetermined or variable.

8. Silencer arrangement according to one of the preceding claims, **characterized in that** at least one gear speed threshold value for activating the at least one adjustment drive (4) is included in the control device (5).

9. Silencer arrangement according to one of the preceding claims, **characterized in that** the control device (5) can be remote controlled.

10. Silencer arrangement according to one of the preceding claims, **characterized in that** the at least one adjustment body (3) is adjusted in a delayed fashion, wherein the delay time is preferably adjustable.

**Revendications**

1. Ensemble silencieux pour des systèmes d'échappement de véhicules automobiles comportant un moteur à combustion interne, comprenant

    a. un silencieux (1) comprenant

        i. un tuyau d'écoulement des gaz d'échappement (2) destiné à l'acheminement de gaz d'échappement, comportant

            - au moins une ouverture d'entrée des gaz d'échappement, et
            - au moins une ouverture de sortie des gaz d'échappement qui est en liaison d'écoulement avec l'au moins une ouverture d'entrée des gaz d'échappement,

        ii. au moins un corps de réglage (3) pouvant être réglé entre une position d'ouverture et une position de fermeture pour agir sur l'écoulement de gaz d'échappement dans le tuyau d'écoulement des gaz d'échappement (2), et
        iii. au moins un mécanisme de réglage (4) qui est relié à l'au moins un corps de réglage (3) pour régler ce dernier, et

b. un dispositif de commande (5) qui

i. comporte une entrée de signal de vitesse de conduite (13) destinée à recevoir des signaux de vitesse de conduite du véhicule automobile,

ii. comporte une entrée de signaux de vitesse de rotation de moteur (15) destinée à recevoir des signaux de vitesse de rotation du moteur du véhicule automobile, et

iii. est en liaison de transmission de données avec l'au moins un mécanisme de réglage (4) pour régler l'au moins un corps de réglage (3),

dans lequel le dispositif de commande (5) calcule les signaux de rapport de transmission en fonction des signaux de vitesse de conduite et/ou des signaux de vitesse de rotation du moteur, et

le dispositif de commande (5) actionne l'au moins un mécanisme de réglage (4) en fonction des signaux de vitesse de conduite et des signaux de vitesse de rotation du moteur ainsi que des signaux de rapport de transmission du véhicule automobile pour régler l'au moins un corps de réglage (3).

2. Ensemble silencieux selon la revendication 1, **caractérisé en ce que** le dispositif de commande (5) comporte une entrée de signaux de contre-pression des gaz d'échappement (17) destinée à recevoir des signaux qui sont représentatifs de la contre-pression des gaz d'échappement dans le tuyau d'écoulement des gaz d'échappement (2).

3. Ensemble silencieux selon la revendication 2, **caractérisé en ce que** le dispositif de commande (5) actionne l'au moins un mécanisme de réglage (4) en fonction des signaux de contre-pression des gaz d'échappement pour régler l'au moins un corps de réglage (3).

4. Ensemble silencieux selon l'une quelconque des revendications précédentes, **caractérisé en ce que** l'unité de commande (5) comporte une entrée (19) destinée à des signaux indépendants du véhicule automobile.

5. Ensemble silencieux selon l'une quelconque des revendications précédentes, **caractérisé en ce que** le dispositif de commande (5) comporte une entrée d'introduction (21) destinée à introduire des valeurs.

6. Ensemble silencieux selon l'une quelconque des revendications précédentes, **caractérisé en ce qu'**au moins une valeur de seuil de vitesse de conduite est contenue dans le dispositif de commande (5) pour actionner l'au moins un mécanisme de réglage (4), dans lequel l'au moins une valeur de seuil de vitesse de conduite est de préférence prédéterminée ou modifiable.

7. Ensemble silencieux selon l'une quelconque des revendications précédentes, **caractérisé en ce qu'**au moins une valeur de seuil de vitesse de rotation du moteur est contenue dans le dispositif de commande (5) pour actionner l'au moins un mécanisme de réglage (4), dans lequel l'au moins une valeur de seuil de vitesse de rotation du moteur est de préférence prédéterminée ou modifiable.

8. Ensemble silencieux selon l'une quelconque des revendications précédentes, **caractérisé en ce qu'**au moins une valeur de seuil de rapport de transmission est contenue dans le dispositif de commande (5) pour actionner l'au moins un mécanisme de réglage (4).

9. Ensemble silencieux selon l'une quelconque des revendications précédentes, **caractérisé en ce que** le dispositif de commande (5) peut être commandé à distance.

10. Ensemble silencieux selon l'une quelconque des revendications précédentes, **caractérisé en ce que** le réglage de l'au moins un corps de réglage (3) s'effectue de manière retardée dans le temps, le temps de retard étant de préférence réglable.

Fig. 1

EP 2 802 750 B1

Fig. 2

Fig. 3

13

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202005011448 U1
- DE 102005029279 A1
- DE 102006044381 A1
- WO 2012072789 A1